# DEMANDE DE BREVET EUROPEEN

(11) **EP 0 847 107 A1**
(43) Date de publication de la demande: **10.06.1998**
(21) Numéro de dépôt: 97402951.4
(22) Date de dépôt: 05.12.1997
(51) Int. Cl.: H01R 13/00

(54) **Connecteur circulaire modulaire**

(30) Priorité: 06.12.1996 FR 9615035
(71) Demandeur: RADIALL, 93116 Rosny-Sous-Bois (FR)
(72) Inventeur: van den Meersschaut, Bernard Michel, 37530 Nazelles-Negron (FR); Garcia, Laurent Fernand, 37110 Chateau-Renault (FR)
(74) Mandataire: Leszczynski, André

(57) **Abrégé**

Connecteur de section circulaire comprenant deux éléments de connecteur aptes à s'accoupler pour réaliser une connexion, chaque élément de connecteur comprenant un boîtier contenant un bloc-support (1) de forme cylindrique, traversé axialement par des éléments de connexion (2b,3b,4b), les éléments de connexion étant agencés et positionnés dans chaque élément de connecteur de manière à ce que chacun d'eux s'accouple avec un élément de connexion de l'autre élément de connecteur lors de l'accouplement des deux éléments de connecteur.

Le bloc-support (1) est divisé en plusieurs modules distincts (2, 3, 4) aptes à être réunis pour constituer ledit bloc support.

## Description

La présente invention concerne un connecteur circulaire modulaire et ses éléments constitutifs.

On connaît déjà des connecteurs circulaires du type comportant deux éléments de connecteurs aptes à s'accoupler pour réaliser une connexion.

Chaque élément de connecteur comprend un boîtier contenant un bloc-support de forme cylindrique, traversé axialement par des éléments de connexion qui peuvent être par exemple des contacts simples, des contacts de puissance, ou des contacts coaxiaux, qui appartiennent à la famille de contacts électriques, ou encore des contacts pour fibres optiques ou des raccords pneumatiques.

Dans le cas des contacts électriques, le bloc-support joue le rôle d'un isolant qui isole les contacts entre eux et par rapport au boîtier qui est généralement métallique.

Les éléments de connexion sont agencés et positionnés dans chaque élément de connecteur de manière à ce que chacun d'eux s'accouple avec un élément de connexion de l'autre élément de connecteur, lors de l'accouplement des deux éléments de connecteurs.

Ces connecteurs cylindriques connus peuvent être mixtes, c'est-à-dire comporter simultanément des contacts de natures différentes, comme par exemple des contacts électriques et des contacts pour fibres optiques.

Toutefois, ces connecteurs mixtes présentent notamment les inconvénients suivants.

Tout d'abord leur fabrication nécessite de lourds investissements eu égard au nombre d'exemplaires souhaités, étant donné qu'un connecteur mixte répond généralement à un besoin particulier qui n'est pas celui de la majorité des utilisateurs.

De surcroît, ces investissements entraînent des délais de fabrication assez longs, ce qui empêche de répondre rapidement à une nouvelle demande des utilisateurs.

De plus, l'utilisateur qui a commandé à un fabricant un connecteur mixte d'un type particulier, reste lié à ce fabricant tant pour des besoins de réapprovisionnement que pour de simples besoins de maintenance ou d'adaptation. En d'autres termes, un connecteur mixte ne peut pas être partiellement réparé ou légèrement modifié. Il doit être intégralement remplacé par un nouveau connecteur mixte.

La présente invention vise à fournir un connecteur cylindrique modulaire qui résout notamment les problèmes énumérés ci-dessus.

La présente invention a pour objet un connecteur cylindrique du type proposé ci-dessus, qui se caractérise par le fait qu'il comporte un bloc-support cylindrique divisé en plusieurs modules distincts aptes à être réunis pour constituer ledit bloc-support.

De préférence, ces modules distincts présentent des dimensions extérieures identiques.

Selon l'invention, l'un au moins des modules du bloc-support est de préférence compris entre deux plans sécants suivant l'axe du bloc-support.

Dans ce cas, les modules du bloc-support ressemblent à des portions de camembert.

Dans une autre variante, l'un au moins des modules du bloc-support est compris entre deux cylindres coaxiaux au bloc-support.

Dans ce cas, les modules du bloc-support ressemblent à des annexaux coaxiaux.

Dans un mode de réalisation particulier de l'invention, les modules du bloc-support sont munis de moyens d'accrochage qui permettent de les solidariser les uns aux autres pour constituer le bloc-support, avant même que ce dernier ne soit introduit et immobilisé dans le boîtier.

Ces moyens d'accrochage peuvent être par exemple constitués par des harpons élastiques ou des formes complémentaires du type queues d'arondes s'étendant parallèlement à l'axe du bloc-support.

Dans un autre mode de réalisation de l'invention, le boîtier comporte des moyens de rétention individuelle de chaque module du bloc-support, ces moyens de rétention pouvant être par exemple des harpons élastiques et des butées.

Dans ce mode de réalisation, chaque module du bloc-support peut être introduit dans le boîtier indépendamment des autres modules.

Selon l'invention, certains au moins des éléments de connexion peuvent être soit des contacts électriques, soit des contacts pour fibres optiques, soit des raccords pneumatiques et/ou hydrauliques.

Dans un mode de réalisation particulier de l'invention, l'un au moins des éléments de connecteurs comporte un passe-fils qui se compose de plusieurs parties constitutives dont chacune présente une section transversale sensiblement identique à celle du module correspondant du bloc-support.

Avantageusement, un tel connecteur comporte un manchon cloisonné qui est apte à recevoir les différentes parties constitutives du passe-fils.

La présente invention a également pour objet un bloc-support réalisé en plusieurs modules tel que décrit ci-dessus, ainsi que lesdits modules.

L'invention a également pour objet le passe-fils décrit ci-dessus ainsi que ses parties constitutives.

Dans le but de mieux faire comprendre l'invention, on va en décrire maintenant des modes de réalisation donnés à titre d'exemples non limitatifs en référence au dessin annexé dans lequel :
- la figure 1 est une vue éclatée d'un bloc-support d'embase selon un premier mode de réalisation de l'invention,
- la figure 2 est une vue éclatée d'un bloc-support de fiche selon le premier mode de réalisation de l'invention,
- la figure 3 est une vue analogue à la figure 1 après rapprochement des modules du bloc-support,
- la figure 4 est une vue analogue à la figure 2 après rapprochement des modules du bloc-support,
- la figure 5 est une vue éclatée de l'embase,
- la figure 6 est une vue éclatée de la fiche,
- la figure 7 représente l'embase à l'état monté,
- la figure 8 représente la fiche à l'état monté,
- la figure 9 est une vue éclatée des modules du bloc-support de la figure 1,
- la figure 10 est une vue en coupe axiale de deux éléments de connecteurs selon un deuxième mode de réalisation de l'invention,
- la figure 11 est une vue analogue à la figure 10, après accouplement des deux éléments de connecteurs,
- les figures 12 à 14 sont des vues de face d'exemples de modules de bloc-support,
- la figure 15 est une vue partielle de l'arrière du boîtier d'un élément de connecteur selon un troisième mode de réalisation de l'invention,
- la figure 16 est une coupe partielle selon XVI-XVI de la figure 15,
- la figure 17 est une coupe partielle selon XVII-XVII de la figure 15,
- la figure 18 est une vue en perspective d'un module de bloc-support selon le troisième mode de réalisation de l'invention,
- la figure 19 est une vue de détail du boîtier de la figure 15,
- la figure 20 est une vue en coupe axiale d'un élément de connecteur selon un quatrième mode de réalisation de l'invention,
- la figure 21 est une vue de gauche de la figure 20, et
- la figure 22 est une vue éclatée de la partie gauche du boîtier de la figure 20.

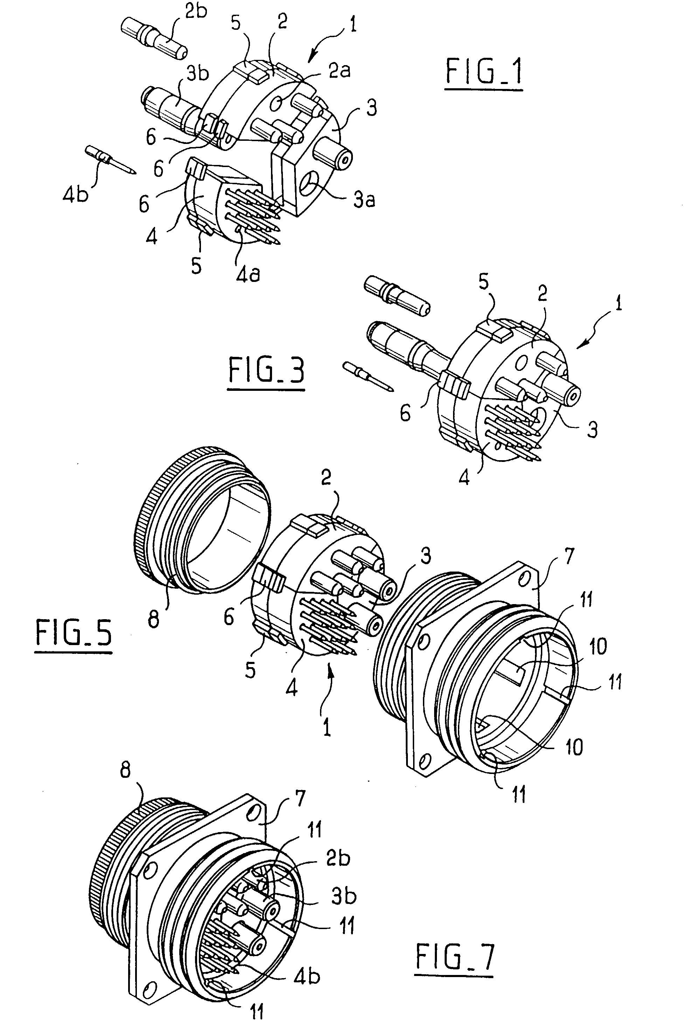

Le bloc-support 1 représenté à la figure 1 comprend trois modules 2, 3 et 4 réalisés en matière plastique isolante et dont chacun présente, en section transversale, la forme d'un tiers de disque, c'est-à-dire la forme d'un secteur angulaire de 120°.

Chaque module est muni d'orifices traversants 2a,3a,4a à l'intérieur desquels s'engagent des contacts 2b,3b,4b qui sont respectivement des contacts de puissance, des contacts coaxiaux et des contacts simples.

Chaque module comprend, sur sa face latérale cylindrique, positionné symétriquement par rapport au plan bissecteur du module, un bossage 5 de section sensiblement rectangulaire.

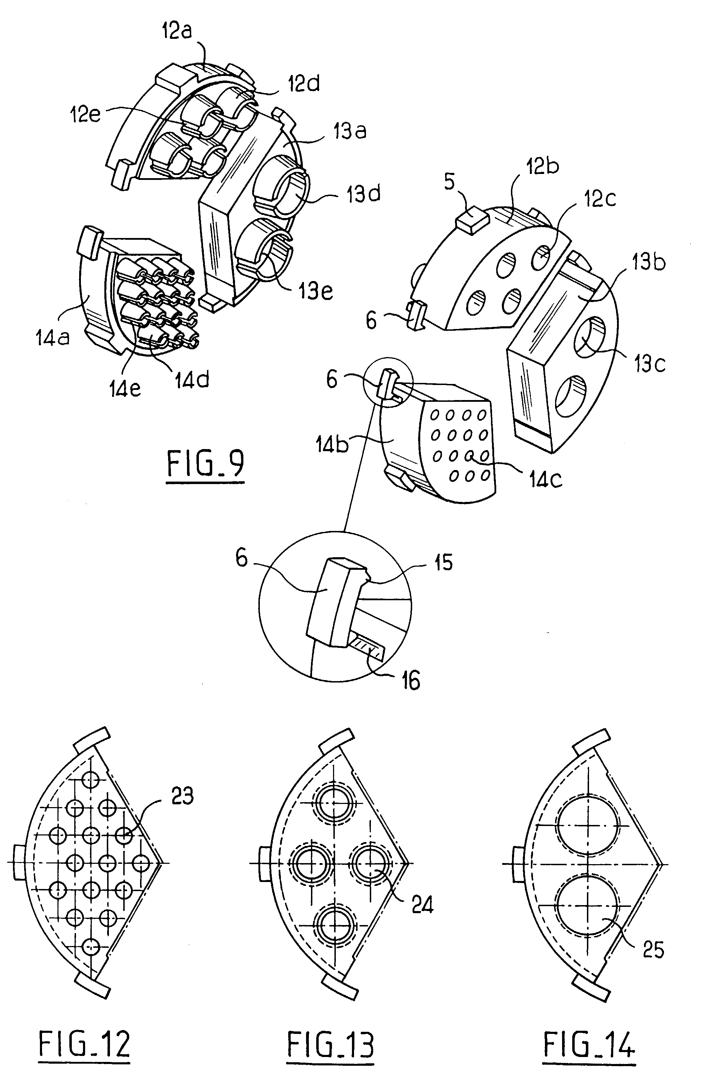

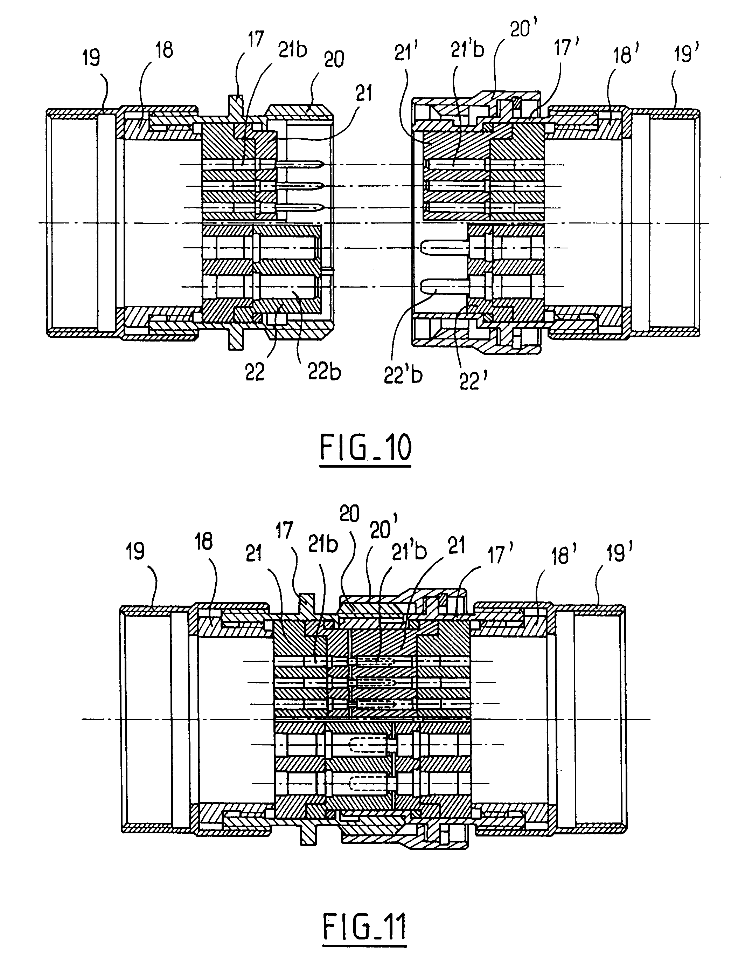

Chaque module comporte également des harpons élastiques 6 qui constituent des moyens d'accrochage des modules les uns aux autres, comme cela sera décrit en référence à la figure 9.

Ces harpons élastiques 6 sont disposés en quinconce sur les bords en regard de deux modules de manière qu'après rapprochement des modules, comme on le voit à la figure 3, ils forment un bossage dont la forme correspond à celle des bossages 5.

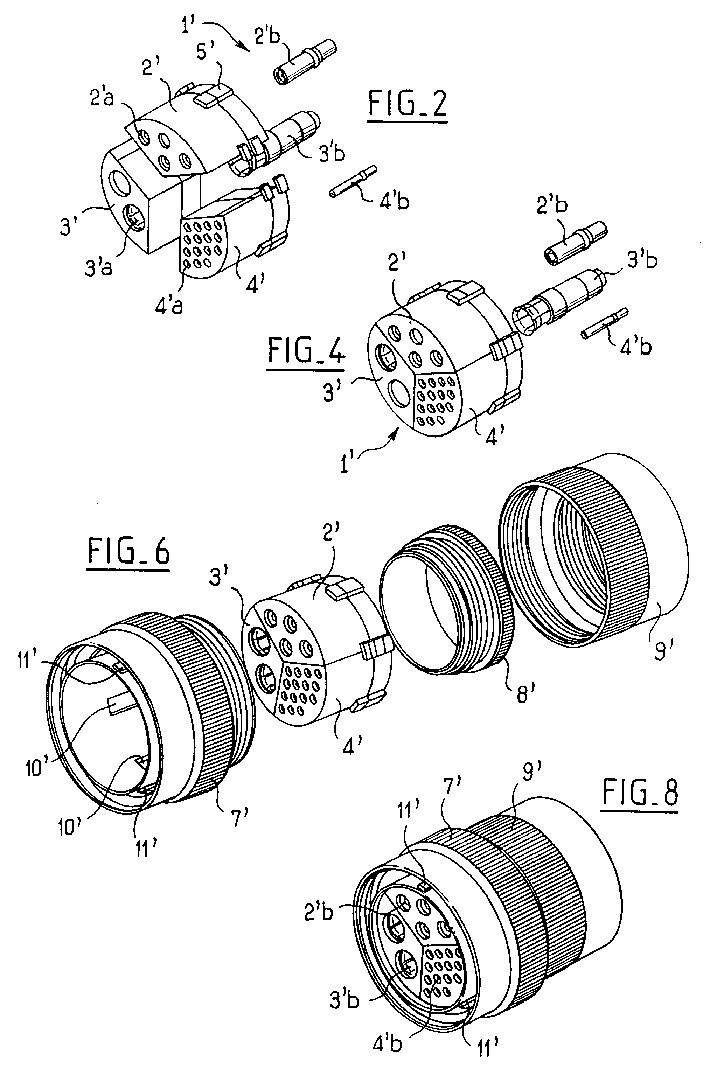

Les figures 2 et 4 peuvent être décrites de façon analogue en affectant chaque chiffre de référence d'un signe ', les contacts 2'b, 3'b, et 4'b étant des contacts femelles, tandis que les contacts 2b,3b et 4b sont des contacts mâles.

On voit qu'une fois le bloc-support 1 assemblé, plusieurs contacts de natures différentes se trouvent réunis les uns à côté des autres en étant agencés et positionnés de manière à pouvoir s'accoupler avec ceux du bloc-support 1' lors d'un rapprochement des deux blocs-supports 1 et 1'.

Comme on le voit aux figures 5 et 6, chaque bloc-support 1,1' se loge dans un boîtier qui, pour l'élément de connecteur représenté à la figure 5, c'est-à-dire pour l'embase, est constitué par un corps 7 et un bouchon 8, et qui, pour l'élément de connecteur représenté à la figure 6, c'est-à-dire pour la fiche, est constitué par un corps 7', un bouchon 8' et un adaptateur 9', lequel adaptateur a pour but de permettre le montage de la fiche sur un serre-câble ou un presse-étoupe.

On voit que chaque boîtier 7,7' comporte des rainures 10,10' dans lesquelles s'engagent les bossages 5,5' et 6,6' des blocs supports, lesquels sont ainsi immobilisés en rotation dans chaque boîtier.

On peut noter à cet égard que la répartition régulière des bossages et des rainures sur chaque bloc-support et dans chaque boîtier, permet de positionner chaque bloc-support dans six positions angulaires différentes, ce qui peut permettre de privilégier une orientation particulière, laquelle est assurée entre les deux éléments de connecteur par un système de détrompage constitué, sur le corps 7, par des rainures 11 et, sur le corps 7', par des bossages 11' qui pénètrent dans lesdites rainures lors de l'accouplement des deux éléments de connecteur.

Sur les figures 7 et 8, l'embase et la fiche apparaissent comme des éléments de connecteurs mixtes traditionnels.

Sur la figure 9 on a représenté la manière dont est constitué le bloc-support de la figure 1.

Chacun des modules 2, 3, 4 se compose de deux parties, à savoir, une partie arrière 12a, 13a, 14a et une partie avant 12b, 13b, 14b.

Chaque partie avant est munie d'orifices traversants 12c, 13c, 14c, dont l'embouchure (non visible) dirigée vers la partie arrière définit un évidement dans lequel pénètrent des clips 12d, 13d, 14d prolongeant des orifices traversants 12e, 13e, 14e ménagés dans les parties arrière 12a,13a,14a dans l'axe des orifices 12c, 13c, et 14c de la partie avant.

La partie arrière et la partie avant sont réalisées séparément, de préférence par moulage, puis sont réunies l'une à l'autre par collage, soudure ou assemblage mécanique pour former les trois modules 2, 3, 4 munis des orifices traversants 2a, 3a, 4a.

Les contacts 2b, 3b, 4b sont ensuite insérés dans chaque module par la face arrière de ce dernier en étant immobilisés axialement par les clips 12d, 13d et 14d et par une butée d'insertion (non représentée).

Chaque harpon 6 est constitué par une patte sensiblement parallélépipédique munie, sur sa face dirigée vers l'intérieur du bloc-support, d'une nervure en V 15 qui pénètre dans une rainure 16 de forme correspondante prévue sur la face latérale cylindrique du module voisin.

La figure 10 représente deux éléments de connecteurs selon un deuxième mode de réalisation de l'invention, l'élément de connecteur de gauche étant une embase, tandis que l'élément de connecteur de droite est une fiche.

Dans ce mode de réalisation, l'embase comporte un corps 17, un bouchon 18 et un adaptateur 19, tandis que la fiche comporte, en plus des éléments correspondants 17',18',19', une douille d'assemblage 20' qui vient se visser sur un filetage 20 prévu à l'avant du corps 13 pour le maintien du connecteur à l'état assemblé.

Chaque bloc-support comprend plusieurs modules dont deux, 21 et 22, 21' et 22', sont visibles sur chaque coupe.

Le module inférieur 22 est prévu pour recevoir des contacts de puissance 22b, tandis que le module supérieur 21 est prévu pour recevoir des contacts simples 21b.

Ce mode de réalisation est notamment remarquable en ce que, grâce à la modularité du bloc-support, on a pu réunir dans un même élément de connecteur des contacts mâles et des contacts femelles.

Ainsi, l'embase comporte des contacts de puissance 22b femelles, et des contacts simples 21b mâles, tandis que la fiche comporte des contacts de puissance 22'b mâles, et des contacts simples 21'b femelles.

A l'état accouplé du connecteur, comme on le voit à la figure 11, les éléments de connexion s'accouplent entre eux sans aucune difficulté.

Sur la figure 12, on a représenté un premier exemple de module de bloc-support.

Dans ce cas, le module comporte quinze orifices traversants 23 qui sont chacun destiné à recevoir un contact simple.

Sur la figure 13, on a représenté un deuxième exemple de module comprenant quatre orifices traversants 24 prévus pour recevoir des contacts de puissance.

Sur la figure 14, on a représenté un troisième exemple de module comprenant deux orifices traversants 25 prévus pour recevoir des contacts coaxiaux.

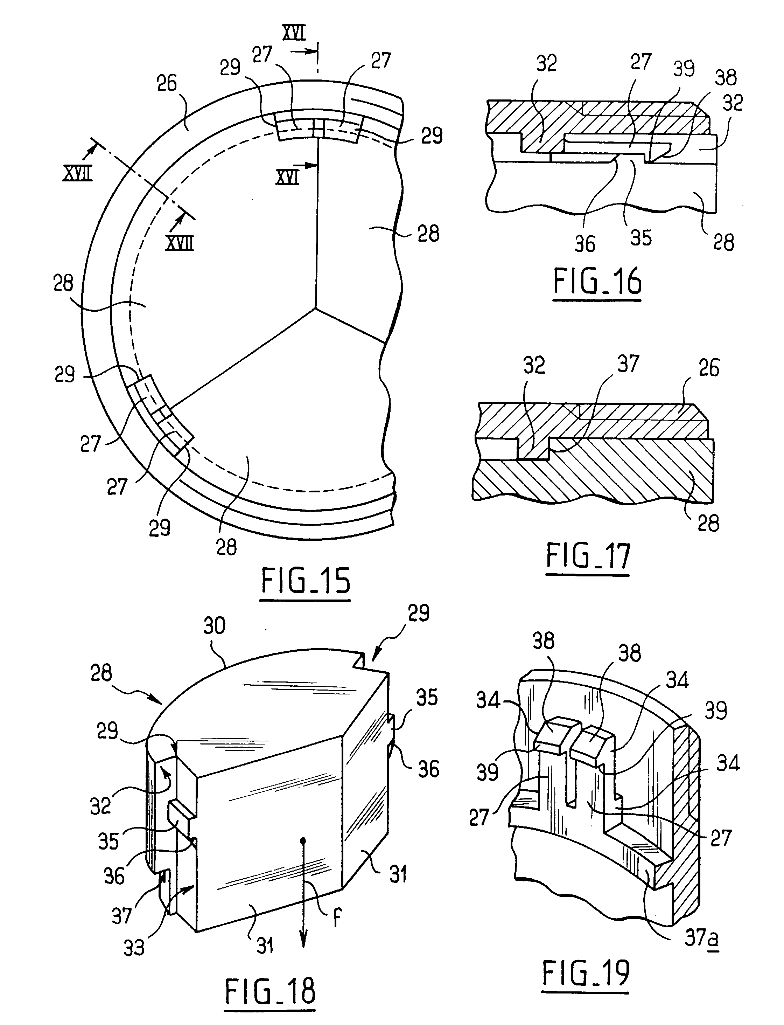

Les figures 15 à 19 illustrent un troisième mode de réalisation dans lequel le boîtier 26 de l'élément de connecteur comprend trois paires de harpons 27 qui constituent des moyens de rétention individuelle de chaque module dans le bloc-support.

Chaque paire de harpons est mieux visible sur la perspective de la figure 19.

Pour pouvoir coopérer avec un tel boîtier, chaque module 28 présente, comme on le voit à la figure 18, une échancrure 29 à chaque extrémité de sa paroi latérale cylindrique 30, cette échancrure 29 débouchant sur chaque face latérale plane 31 dudit module.

Chaque échancrure est ainsi délimitée par une première paroi 32 qui s'étend radialement par rapport à l'axe du bloc-support, et par une seconde paroi 33 perpendiculaire à la paroi 32.

La largeur de la paroi 33 est égale à la moitié de la distance séparant les deux parois latérales opposées 34 des harpons 22.

A l'intérieur de chaque échancrure 29, le module comporte un bossage 35 de section trapézoïdale, qui s'étend sur la paroi 33 perpendiculairement à l'axe du module et qui est muni d'un chanfrein 36 dirigé vers le bas par rapport à la figure 18.

Le module 28 comporte en outre une portée 37 réalisée dans l'épaisseur de sa paroi latérale cylindrique 30 et dirigée vers le bas par rapport à la figure 18.

Pour être mis en place dans le boîtier 26, le module 28 est présenté en regard dudit boîtier avec sa face latérale cylindrique 30 tangente à la paroi intérieure du boîtier, chaque échancrure 29 se trouvant dans l'alignement d'un seul harpon d'une paire de harpons.

Le module est engagé dans le boîtier par translation axiale, dans le sens indiqué par la flèche F sur la figure 18.

Au moment où l'extrémité du module arrive à la hauteur des harpons 27, la paroi 32 de chaque échancrure 29 vient prendre appui contre une paroi latérale 34 d'un harpon. Le module est ainsi immobilisé dans le boîtier dans toutes les directions perpendiculaires à l'axe du boîtier.

Le module continuant à progresser axialement dans le boîtier, un chanfrein 38 de chaque harpon 27 arrive au contact du chanfrein 36 du bossage trapézoïdal 35 du module, ce qui provoque la déformation élastique du harpon qui s'efface pour laisser passer ledit bossage.

Le harpon revient en position une fois que le bossage 35 a dépassé le chanfrein 38 et la partie formant crochet 39 du harpon, lequel empêche alors le module de ressortir.

Le module est par ailleurs empêché de continuer à s'enfoncer dans le boîtier en raison de la présence d'une collerette 37a du boîtier, contre laquelle prend appui la portée 37 formée dans l'épaisseur de la paroi latérale cylindrique 30 du module.

Le module est donc maintenu dans le boîtier indépendamment des autres modules et peut ultérieurement être extrait du boîtier grâce à un outil (non représenté) qui écarte les harpons 27.

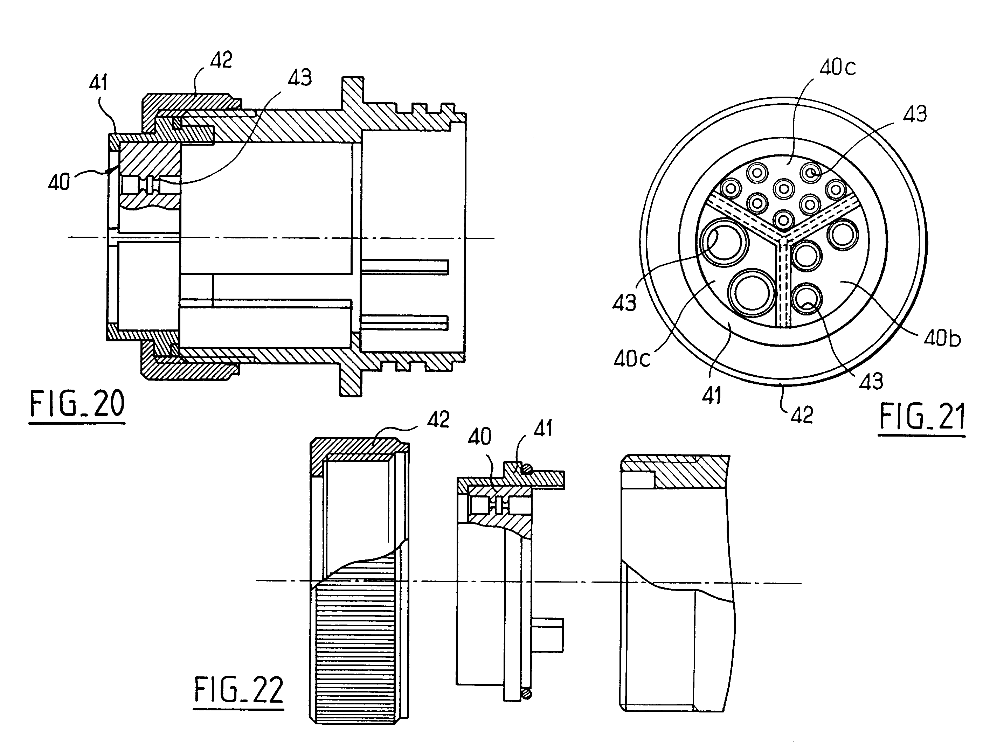

Sur les figures 20 à 22, on voit un boîtier muni, à sa partie arrière (à gauche par rapport à la figure 20), d'un passe-fils 40 logé à l'intérieur d'une carcasse de passe-fils 41 (ou manchon) retenue sur le boîtier par un bouchon 42.

Le passe-fils est constitué de trois parties constitutives 40a, 40b, et 40c, qui sont chacune munie d'orifices traversants permettant le passage des fils arrivant au contact correspondant.

A la manière connue, chaque orifice du passe-fils 40 comporte des lèvres d'étanchéité 43 qui enserrent le fil.

La carcasse du passe-fils 41 est cloisonnée pour former trois logements destinés chacun à recevoir une partie constitutive du passe-fils.

Ainsi, on comprend que si on remplace un module de bloc-support par un module de bloc-support destiné à supporter des contacts différents, il suffit de remplacer la partie constitutive de passe-fils correspondante, sans devoir remplacer le reste du passe-fils.

Il est bien entendu que les modes de réalisation qui viennent d'être décrits ne présentent aucun caractère limitatif et qu'ils pourront recevoir toutes modifications désirables sans sortir pour cela du cadre de l'invention.

En particulier, il convient de souligner que les modules du bloc-support pourraient être séparés non seulement par des plans sécants sur l'axe du bloc-support mais également par des cylindres coaxiaux au bloc-support.

## Revendications

1. Connecteur de section circulaire comprenant deux éléments de connecteur aptes à s'accoupler pour réaliser une connexion, chaque élément de connecteur comprenant un boîtier (7,8;7',8',9') contenant un bloc-support (1 ; 1') de forme cylindrique, traversé axialement par des éléments de connexion (2b,3b,4b; 2'b,3'b,4'b), les éléments de connexion étant agencés et positionnés dans chaque élément de connecteur de manière à ce que chacun d'eux s'accouple avec un élément de connexion de l'autre élément de connecteur lors de l'accouplement des deux éléments de connecteur, caractérisé par le fait que le bloc-support (1,1') est divisé en plusieurs modules distincts (2,3,4,2',3',4') aptes à être réunis pour constituer ledit bloc support.

2. Connecteur selon la revendication 1, caractérisé par le fait que les modules (2,3,4,2',3',4') présentent des dimensions extérieures identiques.

3. Connecteur selon l'une quelconque des revendications 1 et 2, caractérisé par le fait que l'un au moins des modules (2,3,4 ; 2',3',4') est compris entre deux plans sécants suivant l'axe du bloc-support (1 ; 1').

4. Connecteur selon l'une quelconque des revendications 1 à 3, caractérisé par le fait que l'un au moins des modules (2,3,4 ; 2',3',4') est compris entre deux cylindres coaxiaux au bloc-support (1; 1').

5. Connecteur selon l'une quelconque des revendications 1 à 4, caractérisé par le fait que les modules (2,3,4 ; 2',3',4') sont munis de moyens d'accrochage (6 ; 6') qui permettent de les solidariser les uns aux autres pour constituer le bloc-support avant même que ce dernier ne soit introduit et immobilisé dans le boîtier.

6. Connecteur selon la revendication 5, caractérisé par le fait que les moyens d'accrochage sont constitués par des harpons élastiques (6, 15, 16 ; 6').

7. Connecteur selon la revendication 5, caractérisé par le fait que les moyens d'accrochage sont constitués par des formes complémentaires du type queues d'arondes s'étendant parallèlement à l'axe du bloc-support (1 ; 1').

8. Connecteur selon l'une quelconque des revendications 1 à 4, caractérisé par le fait que le boîtier (26) comporte des moyens (27,37a) de rétention individuelle de chaque module (28) du bloc-support (1,1').

9. Connecteur selon la revendication 8, caractérisé par le fait que les moyens de rétention comprennent des harpons élastiques (27) et des butées (35,37,37a).

10. Connecteur selon l'une quelconque des revendications 1 à 9, caractérisé par le fait que certains au moins des éléments de connexion (2b, 3b, 4b ; 2'b, 3'b, 4'b) sont des contacts électriques.

11. Connecteur selon l'une quelconque des revendications 1 à 10, caractérisé par le fait que certains au moins des éléments de connexion sont des contacts pour fibres optiques.

12. Connecteur selon l'une quelconque des revendications 1 à 11, caractérisé par le fait que certains au moins des éléments de connexion sont des raccords pneumatiques et/ou hydrauliques.

13. Connecteur selon l'une quelconque des revendications 1 à 12, caractérisé par le fait qu'il comporte un passe-fils (40) composé de plusieurs parties constitutives (40a,40b,40c) dont chacune présente une section transversale sensiblement identique à celle du module correspondant (2,3,4 ; 2',3',4') du bloc-support (1 ; 1').

14. Connecteur selon la revendication 13, caractérisé par le fait qu'il comporte un manchon cloisonné (41) apte à recevoir les différentes parties constitutives (40a,40b,40c) du passe-fils (40).

15. Bloc-support pour élément de connecteur d'un connecteur de section circulaire comprenant deux éléments de connecteur aptes à s'accoupler pour réaliser une connexion, ledit bloc-support (1,1') étant de forme cylindrique, traversé axialement par des éléments de connexion (2b,3b,4b ; 2'b,3'b,4'b) qui sont agencés et positionnés de manière à ce que chacun d'eux s'accouple avec un élément de connexion de l'autre élément de connecteur lors de l'accouplement des deux éléments de connecteur, caractérisé par le fait qu'il est divisé en plusieurs modules distincts (2,3,4 ; 2',3',4') aptes à être réunis.

16. Module de bloc-support d'un élément de connecteur d'un connecteur de section circulaire comprenant deux éléments de connecteur aptes à s'accoupler pour réaliser une connexion, caractérisé par le fait qu'il est traversé axialement par des éléments de connexion (2b,3b,4b; 2'b,3'b,4'b) et qu'il est apte à être réuni à d'autres modules distincts pour constituer un bloc-support (1,1') de forme cylindrique, de telle sorte que les éléments de connexion traversant les modules sont positionnés dans chaque élément de connecteur de manière à ce que chacun d'eux s'accouple avec un élément de connexion de l'autre élément de connecteur, lors de l'accouplement des deux éléments de connecteur.
